# EUROPÄISCHE PATENTANMELDUNG

(11) **EP 1 213 644 A2**
(43) Veröffentlichungstag der Anmeldung: **12.06.2002**
(21) Anmeldenummer: 01128341.3
(22) Anmeldetag: 30.11.2001
(51) Int. Cl.: G06F 3/12

(54) **Drucksystem und Verfahren zur Individualisierung eines Druckauftrags**

(30) Priorität: 06.12.2000 US 731503
(71) Anmelder: Heidelberger Druckmaschinen Aktiengesellschaft, 69115 Heidelberg (DE)
(72) Erfinder: Chapman, Edward Neil, Rochester, NY 14606 (US)
(74) Vertreter: Franzen, Peter

(57) **Zusammenfassung**

Ein Verfahren und eine Vorrichtung zur Individualisierung eines Druckauftrags umfasst den Empfang einer Eingabe einer Anwendungsdatei. Ein bevorzugtes Druckmerkmal wird aus einer Gruppe von bevorzugten Druckmerkmalen ausgewählt. Der Druckertreiber (50), der den bevorzugten Merkmalen zugeordnet ist, wird auf die Anwendungsdatei angewendet. Die Anwendungsdatei wird mit Hilfe des Druckertreibers (50) gedruckt.

## Beschreibung

Diese Erfindung betrifft eine Druckvorrichtung und ein Druckverfahren, das eine dynamische bzw. fliegende Anpassung eines Druckauftrags an die Vorgaben eines Anwenders, das sogenannte Individualisieren, unterstützt.

Eine Standarddruckarchitektur kann eine Hardware- und Softwarekonfiguration umfassen, die eine begrenzte Individualisierung bei der Ausführung eines Druckauftrags unterstützt. Ein Anbieter von Drucksoftware kann ein Standardprodukt mit Hilfe spezieller Softwaremodifikationen abändern, um die Anforderungen eines Kunden in Bezug auf die Individualisierung eines Druckauftrags zu erfüllen. Wenn bei mehreren Kunden spezielle Softwaremodifikationen vorliegen, können die Wartung und die Fehlersuche bei Druckerproblemen für die Kunden, den Anbieter oder für beide unwirtschaftlich werden. Beispielsweise ist es möglich, dass die Standarddokumentation eines Standardsoftwareprodukts nicht mehr auf eine modifizierte Version des Standardsoftwareprodukts anwendbar ist. Weiterhin können die Modifikationen von Kunde zu Kunde verschieden sein, so dass eine universelle Ausbildung von Technikern für ein Standardsoftwareprodukt bei der Fehlersuche nicht von Nutzen ist. Der Softwareanbieter kann vertraglich verpflichtet sein, Qualitätssicherungs- und -zertifizierungstests für ein Softwareprodukt durchzuführen. Unterschiede im Design der Softwareprodukte können zur Folge haben, dass diese Qualitätssicherungs- und -zertifizierungstests teurer und schwieriger durchzuführen sind.

Obwohl zahlreiche Softwaremodifikationen möglich sind, kann der Drucksoftwareanbieter mindestens eines von verschiedenen typischen Verfahren zur Individualisierung von Standardsoftware verwenden. Gemäß einem Verfahren werden die Standardsoftwarebefehle so modifiziert, dass sie eine Rasterbildverarbeitung (RIP) ausführen und die verarbeiteten Daten in Dateien im Tagged-Image-File-Format (TIFF-Dateien) speichern, um sie zu einem späteren Zeitpunkt zu drucken. Gemäß einem anderen Verfahren werden die Standardsoftwarebefehle so modifiziert, dass ein "Serienbrieferstellungs"-Anwendungsprogramm eingesetzt wird, das für einen Anwender im Allgemeinen transparent ist.

Ein Softwareanbieter kann sogar eine spezielle Gruppe von Software-Ingenieuren einsetzen, die einen Kundendienst für die vorgenannten Softwaremodifikationen einrichten und bereitstellen. Durch die Gehälter, Löhne, Zuwendungen und Unterhaltungskosten der Sonderingenieursgruppe werden die Kosten der Softwareprodukte möglicherweise erhöht oder der finanzielle Gewinn, der andernfalls möglich wäre, verringert. Weiterhin benötigt die Sondergruppe für die Entwicklung und Prüfung von Softwaremodifikationen Zeit, um die Individualisierung zu erzielen, wodurch sich die Verfügbarkeit einer modifizierten Drucksoftware für Kunden in Eile unter Umständen verzögert. Somit besteht ein Bedarf, eine Individualisierung des Softwareprodukts und eines Druckauftrags zu ermöglichen, ohne das Standarddrucksystem in einer ungleichförmigen Weise zu modifizieren. Weiterhin besteht ein Bedarf, die Individualisierung eines Druckauftrags dynamisch während eines Druckauftrags ausführen zu können.

Demgemäss liegt der Erfindung die Aufgabe zugrunde, eine solche Individualisierung bereitzustellen. Diese Aufgabe wird durch die Merkmale des Verfahrens nach Anspruchs 1 sowie durch eine Vorrichtung gemäß Anspruch 9 gelöst. Weitere Merkmale ergeben sich aus den Unteransprüchen und nebengeordneten Ansprüchen.

Gemäß einem Gesichtspunkt der Erfindung umfassen ein Verfahren und eine Vorrichtung zur Individualisierung eines Druckauftrags das Umwandeln einer empfangenen Anwendungsdatei in ein Standardformat, wie beispielsweise ein Dateiformat in Seitenbeschreibungssprache. Ein Anwender wählt ein bevorzugtes Dokumentverarbeitungsmerkmal (z.B. ein Druckmerkmal) aus einer Gruppe von Druckmerkmalen für den Druckauftrag aus. Das ausgewählte bevorzugte Dokumentverarbeitungsmerkmal (oder eine Individualisierungsdarstellung desselben) wird der Anwendungsdatei zugeordnet. Ein Drucker wählt basierend auf dem gewählten bevorzugten Dokumentverarbeitungsmerkmal ein betriebsbereites Plug-In-Modul oder eine Folge von Plug-In-Modulen aus. Weiterhin druckt der Drucker die Anwendungsdatei, wobei er für den Druckauftrag das betriebsbereite Plug-In-Modul oder eine Folge von Plug-In-Modulen verwendet.

Die Erfindung wird nachfolgend mit Bezug auf die Zeichnungen anhand bevorzugter Ausführungsformen beschrieben.

In den Zeichnungen zeigen:
- FIG. 1: ein Blockdiagramm einer Ausführungsform einer Vorrichtung zur Unterstützung der Individualisierung eines Druckauftrags gemäß der Erfindung,
- FIG. 2: ein Ablaufdiagramm eines Verfahrens zur Unterstützung der Individualisierung eines Druckauftrags gemäß FIG. 1,
- FIG. 3: ein Blockdiagramm einer anderen Ausführungsform einer Vorrichtung zur Unterstützung der Individualisierung eines Druckauftrags gemäß der Erfindung,
- FIG. 4: ein Ablaufdiagramm eines Verfahrens zur Unterstützung der Individualisierung eines Druckauftrags gemäß FIG. 3,
- FIG. 5: ein Blockdiagramm einer anderen Ausführungsform einer Vorrichtung zur Unterstützung der Individualisierung eines Druckauftrags gemäß der Erfindung,
- FIG. 6: ein Ablaufdiagramm eines Verfahrens gemäß der Erfindung zur Ausführung einer anwenderspezifischen Komponente (z.B. einer anwenderspezifischen Testprozedur) eines Plug-In-Moduls im Drucker,
- FIG. 7: ein Ablaufdiagramm eines Verfahrens zur Ausführung eines spezifischen Beispiels eines Plug-In-Moduls, das als Rasterbildverarbeitungsspeicherprozedur (RIP-Speicherprozedur) bezeichnet wird, gemäß der Erfindung, und
- FIG. 8: ein Ablaufdiagramm eines Verfahrens zur Modifikation bzw. Individualisierung von Interpretierbefehlen des Druckers gemäß der Erfindung.

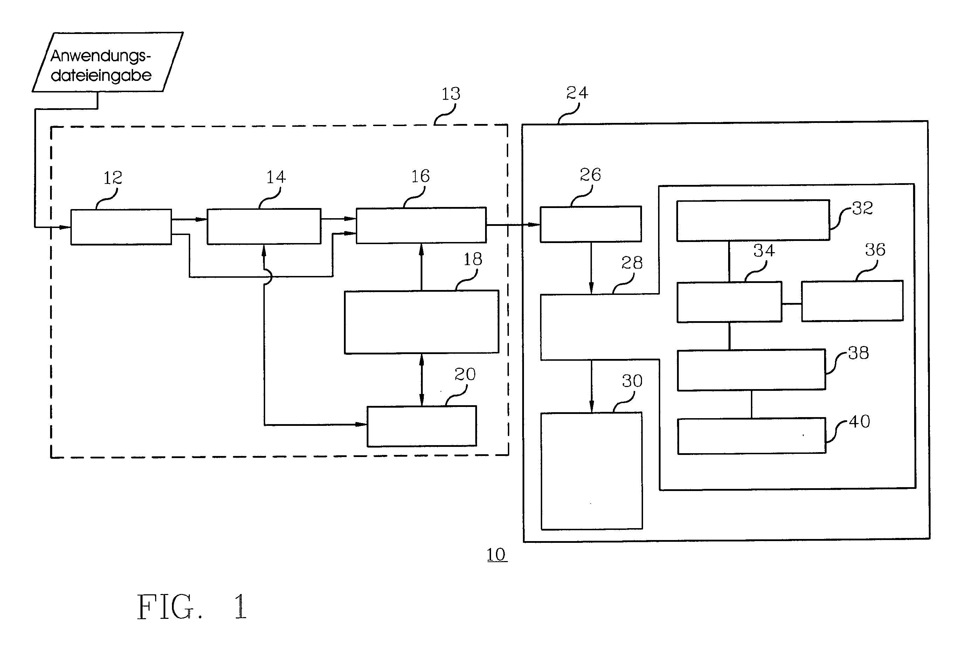

FIG. 1 ist ein Blockdiagramm einer Druckvorrichtung 10 zur Individualisierung eines Druckauftrags gemäß der Erfindung. Die Druckvorrichtung 10 umfasst ein Datenverarbeitungssystem 13, das an einen Drucker 24 angeschlossen ist. FIG. 1 zeigt die gegenseitige logische Beziehung der Softwarekomponenten in der Druckvorrichtung 10. Das Datenverarbeitungssystem 13 und der Drucker 24 können jeweils einen Computer mit einem oder mehreren Datenprozessoren umfassen. Beispielsweise kann das Datenverarbeitungssystem 13 oder der Drucker 24 einen Datenprozessor, der einem Speicher zugeordnet ist, sowie mindestens eine Datenbusleitung für die Kommunikation mit elektronischen Geräten oder Hardware zur Unterstützung der Operation der Softwarekomponenten aus FIG. 1 umfassen.

Das Datenverarbeitungssystem 13 umfasst einen Detektor 12, der Daten an einen Konverter 14 oder eine Herunterladeeinrichtung 16 ausgibt. Eine Anwenderschnittstelle 20 ist, wie in FIG. 1 gezeigt, entweder direkt oder über eine Erweiterungseinrichtung für anwenderspezifische Daten 18 mit der Herunterladeeinrichtung 16 verbunden. Weiterhin kann die Anwenderschnittstelle 20 zur Überwachung des Umwandlungsprozesses mit dem Konverter 14 verbunden sein. Die Herunterladeeinrichtung 16 ist mit einem Drucker 24 verbunden.

Der Drucker 24 umfasst einen Spooler 26, der mit einem Rasterbildprozessor 28 kommuniziert. Der Rasterbildprozessor 28 kann seinerseits mit einem Rasterdruckmodul 30 (z.B. einer Markiermaschine) kommunizieren. Der Rasterbildprozessor 28 umfasst einen Individualisierungsdetektor 32, der die Anwesenheit oder Abwesenheit von anwenderspezifischen Daten in einem Druckauftrag, der vom Datenverarbeitungssystem 13 ausgegeben wird, erfasst. Der Individualisierungsdetektor 32 kommuniziert mit einem Plug-In-Selektor 34. Der Plug-In-Selektor 34 kann auf eine Plug-In-Datenbank 36 zugreifen, um ein Plug-In-Modul auszuwählen, das den erfassten anwenderspezifischen Daten zugeordnet ist. Der Plug-In-Selektor 34 stellt ein aktives Plug-In-Modul 38 als ausgewähltes Plug-In-Modul bereit. Ein Interpretierer 40 kommuniziert mit dem aktiven Plug-In-Modul 38, um eine Individualisierung durchzuführen, die von den anwenderspezifischen Daten spezifiziert wird, bzw. von diesen abzuleiten ist.

Ein Anwendungsprogramm stellt eine Anwendungsdatei für eine Eingabeeinrichtung des Datenverarbeitungssystems 13 bereit. Die Anwendungsdatei kann eine Textverarbeitungsdatei, eine Tabellenkalkulationsdatei, eine Datei eines computergestützten Zeichenanwendungsprogramms (CAD) oder jede andere Datei, die mit dem Datenverarbeitungssystem 13 kompatibel ist, darstellen. Die Anwendungsdatei kann in Form einer Datei in Seitenbeschreibungssprache (PDL) oder einem anderen Format vorliegen.

Eine Seitenbeschreibungssprache (PDL) ist eine Sprache, die das Layout und den Inhalt einer gedruckten Seite definiert. Eine PDL-Datei kann eine Datei im portablen Dokumentformat (PDF), in Druckersteuerungssprache (PCL) oder in PostScript umfassen. Die Seitenbeschreibungssprache kann objektorientiert sein, so dass die Seitenbeschreibungssprache das Layout und den Inhalt einer Seite als geometrische Objekte, wie beispielsweise Linien und Kurven, beschreibt.

Das portable Dokumentformat (PDF) ist ein Dateiformat, das von Adobe Systems Inc. entwickelt wurde. Das PDF-Format oder ein anderes PDL-Format akzeptiert Formatierungsinformationen von einer Vielzahl von Anwendungsprogrammen und bietet ein Standardformat, das unter verschiedenen Anwendern ausgetauscht werden kann. Die Hewlett-Packard-Druckersteuerungssprache (PCL) wurde von der Hewlett-Packard Company entwickelt. Eine PostScript-Datei ist eine Datei, die Bilder in einer objektorientierten Sprache als Vektorgrafiken ausdrückt. Das PostScript-Format behandelt Bilder als geometrische Objekte bzw. Vektorgrafiken, die durch mathematische Formeln dargestellt werden. Ein Beispiel für eine PDL-Datei ist eine PostScript-Datei von Adobe. Adobe PostScript wurde von Adobe Systems Inc. entwickelt.

Der Detektor 12 liest die Anwendungsdatei oder einen Teil der Anwendungsdatei (z.B. einen Kopfsatz der Datei) um zu bestimmen, ob die Anwendungsdatei eine PDL-Datei oder ein anderes Format darstellt. Wenn die Anwendungsdatei eine PDL-Datei darstellt, leitet der Detektor 12 die PDL-Datei direkt an die Herunterladeeinrichtung 16 weiter. Wenn der Detektor 12 jedoch bestimmt, dass die Anwendungsdatei eine Datei darstellt, die von einer PDL-Datei verschieden ist, wird die Datei in den Konverter 14 eingegeben.

Der Konverter 14 wandelt die Anwendungsdatei in eine PDL-Datei oder ein anderes Standardformat um, das der Drucker 24 verstehen kann, falls die Anwendungsdatei nicht bereits eine PDL-Datei ist. Eine Seitenbeschreibungssprache (PDL) liefert einem Drucker Befehle zum Drucken eines Dokuments beispielsweise als Rastergrafiken oder Vektorgrafiken. Der Konverter 14 kommuniziert mit einer Herunterladeeinrichtung 16, um eine umgewandelte Anwendungsdatei in einem PDL-Format oder einem anderen Standardformat bereitzustellen. Die Anwendungsdatei wird in das PDL-Format übertragen, so dass der Drucker 24 die Anwendungsdatei verstehen und interpretieren kann.

Die Anwenderschnittstelle 20 ermöglicht es dem Anwender, Einstellungen einzugeben und Dokumentverarbeitungsmerkmale (wie beispielsweise Druckmerkmale) des Druckers 24 für einen Druckauftrag der PDL-Datei mit Hilfe der Erweiterungseinrichtung für anwenderspezifische Daten 18 oder auf andere Weise auszuwählen. Die Auswahl der Dokumentverarbeitungsmerkmale wird vorzugsweise zu Beginn oder vor Beginn eines Druckauftrags vorgenommen, um eine akkurate Ausführung der Befehle zu gewährleisten, die mit der Auswahl in Zusammenhang stehen. Ein Dokumentverarbeitungsmerkmal kann ein Druckmerkmal, ein Pre-Print-Verarbeitungsmerkmal und ein Post-Print-Verarbeitungsmerkmal umfassen. Beispielsweise kann ein Pre-Print-Verarbeitungsmerkmal die Auswahl eines bestimmten Druckmediums (wie beispielsweise Farbpapier) und die Größe des Druckmediums umfassen. Ein Post-Print-Verarbeitungsmerkmal kann das Heften von Bogen oder das Sammeln von Bogen nach dem Bedrucken der Bogen umfassen. Ein Druckmerkmal bezeichnet einen Datenparameter oder einen Datenbefehl, der die Art und Weise, in der der Drucker 24 einen Druckauftrag druckt, das optische Erscheinungsbild eines Druckauftrags bzw. eines Teils davon oder eine physikalische Eigenschaft eines abgeschlossenen Druckauftrags steuern kann. Beispielsweise können Druckmerkmale die Auswahl von Zeichensätzen, die Auflösung von Bildern und die Auswahl von Farben, mit denen ein Dokument gedruckt wird, umfassen.

Ein Zuteilungsprogramm für Plug-In-Module bezeichnet eine Routine oder einen Befehlssatz zur Bestimmung der Kennung und der Reihenfolge von Plug-In-Modulen, die für den Drucker 24 zu verwenden sind. Sobald ein Drucker 24 ein geeignetes Plug-In-Modul auswählt, entspricht das ausgewählte aktive Plug-In-Modul 38 den Spezifikationen, die von einer Anwenderprogramm-Schnittstelle (API) festgelegt werden. Bei einer Ausführungsform befindet sich die API im Rasterbildprozessor 28. Die API bildet eine Schnittstelle zwischen dem Rasterbildprozessor 28 und einer anwenderspezifischen Bibliothek (wie beispielsweise einer dynamischen Verbindungsbibliothek), die dem aktiven Plug-In-Modul 38 zugeordnet ist. Die API gibt Softwarebefehle aus, die die Definition und die Ausführung des aktiven Plug-In-Moduls 38 unterstützen. Die API ist eine Spezifikation oder eine Rahmenstruktur, die von jeder anwenderspezifischen Bibliothek (wie beispielsweise der dynamischen Verbindungsbibliothek) befolgt wird. Eine anwenderspezifische Bibliothek kann für Bildverarbeitung, einschließlich Drehung des Bildes oder eines Teils des Bildes, Speichern eines Bildes, Komprimierung eines Bildes oder Entnehmen von Bildpunkten aus einem Bild verwendet werden.

Die Erweiterungseinrichtung für anwenderspezifische Daten 18 kann der PDL-Datei oder einer anderen Datei anwenderspezifische Daten für die Interpretation durch den Drucker 24 hinzufügen. Die Anwenderschnittstelle 20 unterstützt die Eingabe oder Spezifikation von anwenderspezifischen Daten durch den Benutzer für das Erweitern der PDL-Datei oder einer anderen Datei, die zum Drucker 24 gesendet werden soll. Eine Anwenderschnittstelle 20 ist mit einer Erweiterungseinrichtung für anwenderspezifische Daten 18 verbunden, um die Auswahl, Aktivierung oder Deaktivierung von Dokumentverarbeitungsmerkmalen des Druckers 24 seitens des Anwenders für einen bestimmten Druckauftrag bzw. Druckaufträge zu unterstützen.

Bei einer Ausführungsform stellen die anwenderspezifischen Daten einen PDL-Kommentar dar. Ein PDL-Kommentar besteht aus Daten, die zum Auswählen oder Aufrufen von Druckermerkmalen des Druckers 24 verwendet werden. Beispielsweise kann ein PDL-Kommentar die Anwendung eines oder mehrerer Plug-In-Module auf eine Anwendungsdatei ausdrücken. Eine PDL kann eine bestimmte Datenstruktur aufweisen, die eines oder mehrere der folgenden Datenfelder unterstützt: ein Kennzeichen, das einen Beginn des PDL-Kommentars anzeigt, ein Kennzeichen, das die Datenstruktur bzw. den Syntaxtyp eines PDL-Kommentars anzeigt (z.B. bei einem urheberrechtlich geschützten Datenformat, wie beispielsweise KDK-Custom), ein Etikett für ein Plug-In-Modul, einen Ausschaltbefehl für das Plug-In-Modul, einen Einschaltbefehl für das Plug-In-Modul, eine Ausführungsreihenfolge für mehrere Plug-In-Module oder andere Informationen.

Die Herunterladeeinrichtung 16 sendet die PDL-Datei und jegliche begleitenden anwenderspezifischen Daten (wie z.B. einen PDL-Kommentar) zum Drucker 24. Beispielsweise handhabt die Herunterladeeinrichtung 16 die Übertragung einer PDL-Datei und eines zugehörigen PDL-Kommentars zu einem Spooler 26 oder einer anderen Komponente (wie beispielsweise einem Zwischenspeicher) des Druckers 24. Die übertragene PDL-Datei kann sich auf eine Datei beziehen, die vom Konverter 14 stammt, der eine eingegebene Anwendungsdatei umwandelt. Die Herunterladeeinrichtung 16 ordnet die PDL-Datei in geeigneter Weise und in einem geeigneten Protokoll an, um eine Übertragung zu ermöglichen, die mit der vom Drucker 24 unterstützten Übertragungsgeschwindigkeit konsistent ist (beispielsweise über einen Parallelanschluss des Druckers). Bei einer Ausführungsform unterstützt die Herunterladeeinrichtung 16 eine dynamische Individualisierung eines Druckauftrags, indem dynamische oder fliegende Befehle zur Änderung oder Individualisierung von Befehlen an den Drucker 24 unterstützt werden.

Eine PDL-Datei kann von der Herunterladeeinrichtung 16 zu einem Spooler 26 des Druckers 24 heruntergeladen oder gesendet werden. Der Spooler 26 sendet seinerseits die gespoolten Dateien zu einem Rasterbildprozessor 28 (RIP). Innerhalb des RIP 28 sind ein oder mehrere Interpretierer 40 oder Interpretierbefehle für die PDLs vorgesehen. Die Interpretierer 40 wandeln die PDL-Datei in Rasterbilder um, die die Markiermaschine versteht.

Der Spooler 26 stellt ein Programm dar, das das Spoolen bzw. Anordnen von Druckaufträgen in einer Warteschlange in einem elektronischen Speicher oder einer anderen Speichereinrichtung steuert, die vom Drucker 24 verwaltet wird. Spoolen bezeichnet gleichzeitige Peripherieoperationen in Reihe. Ein Betriebssystem des Datenverarbeitungssystems 13 unterstützt den Spooler 26. Entsprechend unterstützt das Anwendungsprogramm, das die Quelle der Anwendungsdatei darstellt, den Spooler 26.

Der Spooler 26 ordnet Druckaufträge oder Teile davon in einer Warteschlange an, die der Verarbeitungskapazität des Rasterbildprozessors 28 entspricht. Ein Zwischenspeicher kann im Spooler 26 angeordnet sein, um die Warteschlange zu unterstützen und einen Datenpuffer zwischen dem Rasterbildprozessor 28 und dem Rasterdruckmodul 30 bereitzustellen. Der Spooler 26 ermöglicht dem Datenverarbeitungssystem 13, in andere Operationen (wie z.B. die Verarbeitung eines anderen Druckauftrags) einzugreifen, während der Druckvorgang am Drucker ausgeführt wird.

Als Rasterbildprozessor 28 werden Hardware, Software oder beide Komponenten bezeichnet, die ein Vektorbild in ein Rasterbild umwandeln. Als Rasterbild wird eine Darstellung eines Bildes mittels Pixeln oder Bildpunkten bezeichnet, die zur Speicherung in einer elektronischen Speichervorrichtung oder einer anderen Speichervorrichtung in Zeilen und Spalten angeordnet sind. Zur Darstellung der einzelnen Bildpunkte bzw. Pixel können ein oder mehrere Bits, die sich im elektronischen Speicher befinden, verwendet werden. Für ein Farbrasterbild sind mehrere Bits bzw. Bytes zur Darstellung der einzelnen Bildpunkte erforderlich.

Ein Vektorbild stellt ein objektorientiertes Bild mit Hilfe von Vektorgrafiken oder objektorientierten Graphiken dar. Vektorbilder können als mathematische Formeln ausgedrückt werden, die verschiedene Komponenten des Bildes definieren. Vektorgrafiken umfassen die Darstellung von alphanumerischen Schriftzeichen in Form eines sogenannten skalierbaren Zeichensatzes oder PostScript-Zeichensatzes. Die meisten Druckvorrichtungen arbeiten letztlich auf der Grundlage von Rasterbildern. Selbst PostScript-Drucker wandeln Vektorgrafiken für den Druck im Drucker im Allgemeinen in Rasterdarstellungen um. Das Rasterbild oder ein Abschnitt desselben wird zum Rasterdruckmodul 30 gesendet. Das Rasterdruckmodul 30 unterstützt den Druck auf dem Druckmedium.

Eine Rasterbilddatei kann für das Speichern, den Austausch und den Druck von Bildern verwendet werden. TIFF (Tagged Image File Format) ist ein Standarddateiformat für das Speichern eines oder mehrerer Bilder als Rasterbilder. TIFF unterstützt unterschiedliche Größen, Auflösungsgrade und Farbvariationen der Bilder. Wenn ein TIFF-Bild in einer PS- oder PDF-Datei integriert ist, unterstützt die resultierende Datei den Zusatz von Produktionsdruckeinstellungen.

Der Rasterbildprozessor 28 umfasst einen Individualisierungsdetektor 32, einen Plug-In-Selektor 34, eine Plug-In-Datenbank 36, ein aktives Plug-In-Modul 38 und einen Interpretierer 40. Der Individualisierungsdetektor 32 bestimmt, ob die Datenerweiterungseinrichtung 18 die PDL-Datei oder eine andere Datei, die von der Herunterladeeinrichtung 16 zum Spooler 26 heruntergeladen wurde, erweitert hat. Beispielsweise kann die Datenerweiterungseinrichtung 18 die PDL-Datei mittels eines Kennzeichens, eines PDL-Kommentars, eines Individualisierungsetiketts oder anderer anwenderspezifischer Daten, die anzeigen, dass eine Individualisierung vorliegt, erweitern oder kennzeichnen. Weiterhin können verschiedene Individualisierungstypen mit Hilfe von Individualisierungsetiketten, die der PDL-Datei zugeordnet sind, gekennzeichnet werden.

Jedes Individualisierungsetikett wird einem anderen zugehörigen Plug-In oder einer Gruppe von Plug-Ins zugeordnet. Basierend auf dem Individualisierungsetikett wählt der Plug-In-Selektor 34 das geeignete Plug-In-Modul aus einer Bibliothek von Plug-In-Modulen in der Plug-In-Datenbank 36 aus. Sobald der Plug-In-Selektor 34 das aktive Plug-In-Modul 38 bzw. die aktive Gruppe von Plug-In-Modulen ausgewählt hat, erteilt das aktive Plug-In-Modul 38 der PDL-Datei die Plug-In-Befehle zur Ausführung eines Druckauftrages. Im Drucker 24 erkennt der Rasterbildprozessor 28 den PDL-Kommentar als anwenderspezifische Daten, so dass er weiß, welche Plug-In-Module in welcher Reihenfolge auszuwählen sind.

Das Plug-In-Modul wird für einen Druckauftrag wie folgt ausgeführt: (1) zu Beginn des Druckauftrags, (2) am Ende des Druckauftrags, (3) innerhalb eines jeden Bildes des Druckauftrags, (4) innerhalb eines jeden Teilbildes des Druckauftrags oder (5) gemäß einer beliebigen Kombination aus den vorgenannten Punkten. Das Plug-In-Modul hat durch die Eingabe der anwenderspezifischen Daten und anderer Druckauftragsdaten über die Anwenderschnittstelle 20 Zugriff auf vollständige Informationen zu dem Druckauftrag. Die anwenderspezifischen Daten umfassen das Individualisierungsetikett, das ein geeignetes Plug-In kennzeichnet, sowie zusätzliche Befehle, die für die Durchführung der Individualisierung notwendig, hilfreich oder auf andere Weise nützlich sind.

Eine PDL wie beispielsweise PostScript verfügt über eine Dateiliste, auf die das Plug-In-Modul zur Steuerung verschiedener Druckmerkmale Bezug nimmt. Beispielsweise verwendet das Plug-In-Modul einen Dateilisteneintrag, auf den der Drucker 24 Bezug nimmt, um ein bestimmtes Druckmerkmal ein- oder auszuschalten. "Procset" und "Setpagedevice" sind zwei Beispiele für Standarddateilisten. "Procset" ist eine PostScript-Dateiliste, die auf einen bestimmten Drucker beschränkt ist. "Setpagedevice" ist allgemeiner oder universeller auf verschiedene Drucker anwendbar als Procset.

Der Rasterbildprozessor 28 umfasst einen oder mehrere Interpretierer 40 mit Interpretierbefehlen für Dateien in Seitenbeschreibungssprache oder andere Dateien, die von der Herunterladeeinrichtung 16 gesendet werden. Ein Interpretierer 40 interpretiert Befehle zur Anordnung der PDL-Datei in Rasterbildern, die das Rasterdruckmodul (wie z.B. die Markiermaschine) des Druckers 24 versteht.

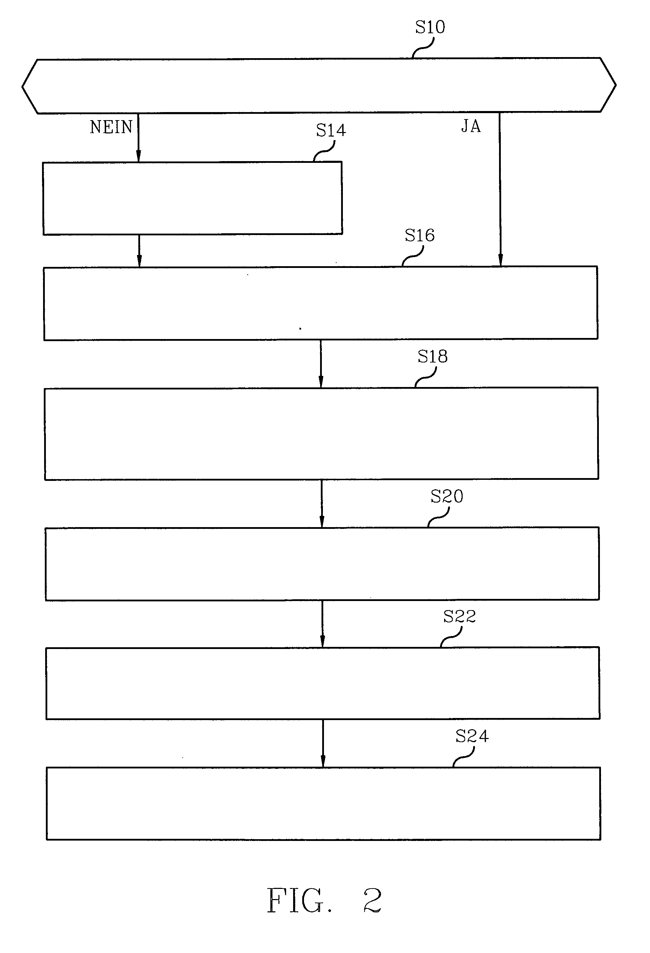

FIG. 2 stellt ein Verfahren zur Individualisierung eines Druckauftrags gemäß dem Blockdiagramm aus FIG. 1 dar. Das Verfahren aus FIG. 2 beginnt bei Schritt S10.

In Schritt S10 erhält das Datenverarbeitungssystem 10 eine Eingabe von einer Anwendungsdatei. Das Datenverarbeitungssystem 13 oder ein Detektor 12 erfasst, ob die Anwendungsdatei eine Datei in Seitenbeschreibungssprache (PDL) darstellt. Eine PDL-Datei kann eine Datei im portablen Dokumentformat (PDF), in Druckersteuerungssprache (PCL) oder in PostScript umfassen. In einem Beispiel kann der Detektor 12 bestimmen, ob die Anwendungsdatei eine Datei in Seitenbeschreibungssprache darstellt, indem er einen Kopfsatz der Anwendungsdatei liest. Falls die Anwendungsdatei eine Datei in Seitenbeschreibungssprache darstellt, wird das Verfahren in Schritt S16 fortgesetzt. Falls die Anwendungsdatei jedoch keine Datei in Seitenbeschreibungssprache darstellt, wird das Verfahren in Schritt S14 fortgesetzt.

In Schritt S14 wandelt das Datenverarbeitungssystem 13 oder der Konverter 14 die Anwendungsdatei in eine Datei in Seitenbeschreibungssprache um. Beispielsweise kann das Anwendungsprogramm Abschnitte der eingegebenen Anwendungsdatei zur Anordnung in einer Schablone entnehmen, die einem Format der Datei in Seitenbeschreibungssprache entspricht.

In Schritt S16 nach Schritt S14 wählt das Datenverarbeitungssystem 13 ein gewünschtes bzw. bevorzugtes Dokumentverarbeitungsmerkmal (wie z.B. ein Druckmerkmal) aus einer Gruppe von bevorzugten Dokumentverarbeitungsmerkmalen aus. Das Datenverarbeitungssystem 13 kann eine Anwenderschnittstelle umfassen, die einem Anwender ein Menü oder eine Bibliothek verschiedener Dokumentverarbeitungsmerkmale bietet. Beispielsweise kann ein Anwender ein bevorzugtes Druckmerkmal in eine Befehlszeile oder ein Menü, das durch die Anwenderschnittstelle 20 unterstützt wird, eingeben.

In Schritt S18 ordnet das Datenverarbeitungssystem 13 der Datei in Seitenbeschreibungssprache für den Druckauftrag ein bevorzugtes Dokumentverarbeitungsmerkmal zu. Eine Erweiterungseinrichtung für anwenderspezifische Daten 18 kann das bevorzugte Dokumentverarbeitungsmerkmal als anwenderspezifische Daten (wie z.B. als Individualisierungsetikett oder als PDL-Kommentar) darstellen, die der Datei in Seitenbeschreibungssprache für den Druckauftrag zugeordnet sind.

In Schritt S20 bearbeitet der Spooler 26 oder der Drucker 24 eine Druckauftragspriorität, die jedem Druckauftrag zugeordnet ist, um eine Reihenfolge für den Druck festzulegen, falls in einem Zwischenspeicher des Spoolers 26 mehrere Druckaufträge vorliegen. Bei einer alternativen Ausführungsform kann Schritt S20 ausgelassen werden, wenn eine Druckwarteschlange nicht erforderlich ist.

In Schritt S22 wählt ein Drucker 24 oder ein Rasterbildprozessor 28 ein Plug-In-Modul aus, das dem bevorzugten Dokumentverarbeitungsmerkmal oder bestimmten anwenderspezifischen Daten zugeordnet ist. Beispielsweise kann der Drucker das Vorhandensein des bevorzugten Dokumentverarbeitungsmerkmals bzw. der bevorzugten Dokumentverarbeitungsmerkmale durch Erfassen des Vorhandenseins der bestimmen anwenderspezifischen Daten oder eines Individualisierungsetiketts, das dem Druckauftrag zugeordnet ist, erfassen. Der Rasterbildprozessor 28 wählt ein geeignetes entsprechendes Plug-In-Modul oder eine Folge von Plug-In-Modulen aus, die das (die) erfasste(n) Dokumentverarbeitungsmerkmal(e) unterstützen.

Das ausgewählte geeignete Plug-In-Modul bzw. die ausgewählten geeigneten Plug-In-Module unterstützen das bevorzugte Dokumentverarbeitungsmerkmal wesentlich. Bei einer Ausführungsform unterstützen die Plug-In-Module, die sich in der Plüg-In-Datenbank 36 befinden oder auf andere Weise verfügbar sind, vorzugsweise eine Zusammenstellung verschiedener Dokumentverarbeitungsmerkmale (wie z.B. Druckmerkmale). Bei einer anderen Ausführungsform können die Dokumentverarbeitungsmerkmale jedes der Plug-In-Module überlappen. Bei einer weiteren Ausführungsform können sich die Dokumentverarbeitungsmerkmale bestimmter Plug-In-Module gegenseitig ausschließen.

In Schritt S24 druckt der Drucker 24 oder das Rasterdruckmodul 30 unter Verwendung des ausgewählten Plug-In-Moduls oder einer ausgewählten Reihenfolge von Plug-In-Modulen, die in Schritt S22 ausgewählt wurden, die Datei in Seitenbeschreibungssprache oder einen Abschnitt derselben. Das Plug-In-Modul kann Druckbefehle, Dokumentbefehle oder dergleichen enthalten.

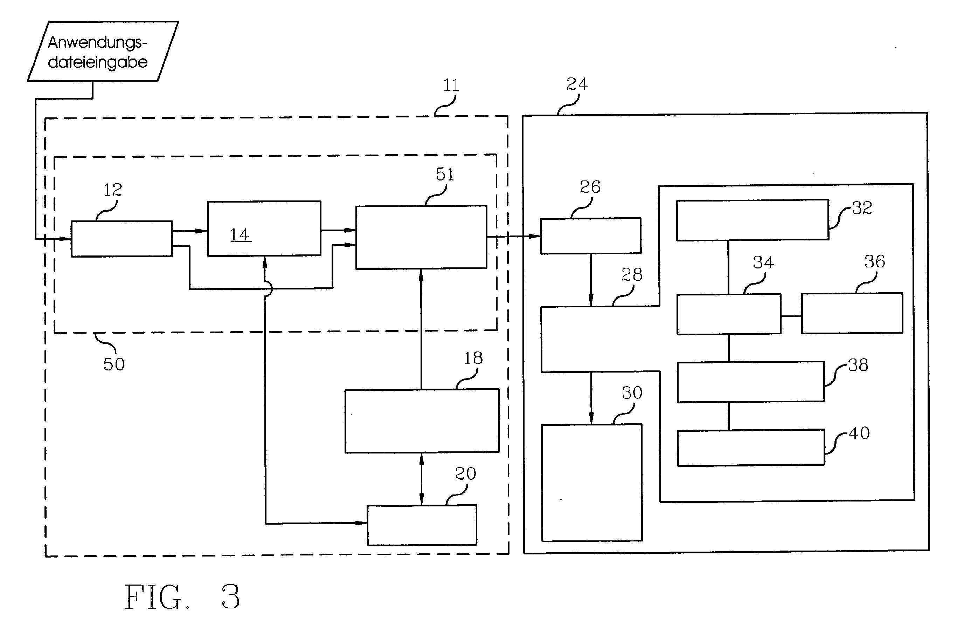

FIG. 3 ist ein Blockdiagramm einer anderen Ausführungsform eines Drucksystems gemäß der Erfindung, das die Individualisierung eines Druckauftrags unterstützt. Die Vorrichtung aus FIG. 3 entspricht der Vorrichtung aus FIG. 1, mit der Ausnahme, dass ein Druckertreiber 50 aus FIG. 3 die Herunterladeeinrichtung 16 aus FIG. 1 ersetzt. Weiterhin kann der Druckertreiber 50 die Funktionen des Detektors 12 und des Konverters 14 sowie die Individualisierungssprozedur handhaben, wie durch die unterbrochenen Linien in FIG. 3 dargestellt. Gleiche Bezugsnummern in FIG. 1 und FIG. 3 bezeichnen gleiche Elemente.

Ein Druckertreiber 50 ist ein Softwareprogramm, das den Betrieb eines Druckers 24 steuert. Beispielsweise kann der Druckertreiber 50 die Datenzuführung zum Drucker 24 mit Hilfe von geeigneten Steuerbefehlen und Datenprotokollen steuern. Der Druckertreiber 50 kann vom Betriebssystem des Datenverarbeitungssystems 11 unterstützt werden.

Der Druckertreiber 50 umfasst einen Druckermerkmalmanager 51. Der Druckermerkmalmanager 51 verwaltet die Auswahl von Dokumentverarbeitungsmerkmalen. Ein Anwender kann über die Anwenderschnittstelle 20 bevorzugte Dokumentverarbeitungsmerkmale auswählen. Die Erweiterungseinrichtung für anwenderspezifische Daten 18 kann an eine Dokumentdatei eines Druckauftrags, die zum Drucker 24 gesendet werden soll, anwenderspezifische Daten (z.B. einen PDL-Kommentar) anhängen oder ihr diese zuordnen.

Ein Druckertreiber kann speziell für die Unterstützung der spezifischen Merkmale eines bestimmten Druckers ausgelegt sein. Ein generischer Druckertreiber kann speziell für die Unterstützung einer Gruppe oder Klasse von Druckern ausgelegt sein. Die Herunterladeeinrichtung kann dazu verwendet werden, dem generischen Druckertreiber Optionen oder zusätzliche Merkmale hinzuzufügen. Im Fall eines PostScript-Dokuments kann das Verarbeitungssystem ein Dokument eines Anwendungsprogramms in eine PDL-Datei umwandeln und gleichzeitig die Merkmale eines Druckertreibers anwenden. Der Druckertreiber kann einen Konverter enthalten.

Ein Anwender kann über eine Anwenderschnittstelle 20 einen Druckertreiber für einen Druckauftrag auswählen. Ein spezifischer Druckertreiber und ein generischer Druckertreiber können ein unterschiedliches Merkmal oder einen unterschiedlichen Satz von Merkmalen des Druckers 24 unterstützen. Beispielsweise kann der spezifische Druckertreiber einen größeren Bereich von Merkmalen eines Druckers 24 unterstützen als der generische Druckertreiber.

Ein Druckertreiber kann eine Anwenderschnittstelle aufweisen, die verschiedene Druckmerkmale und Dokumentverarbeitungs- oder Post-Print-Verfahren (wie z.B. ein Heftgerät) unterstützt. Der Druckertreiber 50 ermöglicht durch Auswahl von verschiedenen Plug-In-Modulen eine Individualisierung eines Druckauftrags, um verschiedene entsprechende Individualisierungsziele eines Druckauftrags zu erzielen. Der Druckertreiber 50 unterstützt die Individualisierung eines Druckauftrags durch Aufrufen verschiedener Plug-In-Module. Ein Druckertreiber gibt herkömmlicher Weise ein PDL-Dokument aus. Der Druckertreiber wählt die Individualisierung durch Ausgabe eines PDL-Kommentars aus. Bestimmte Druckertreiber 50 basieren nicht auf einem PDL-Kommentar, sondern auf Post-"Procset" oder Post-"Setpagedevice".

Im Drucker 24 wählt der Rasterbildprozessor 28 basierend auf den anwenderspezifischen Daten (wie z.B. einem Individualisierungsetikett) oder den ausgwählten Dokumentverarbeitungsmerkmalen ein bevorzugtes Plug-In-Modul oder eine Folge von Plug-In-Modulen zur Durchführung eines Druckauftrags aus. Jedes ausgewählte Plug-In-Modul kann ein oder mehrere ausgewählte Dokumentverarbeitungsmerkmale unterstützen. Weiterhin kann eine Folge von Plug-In-Modulen, die in den anwenderspezifischen Daten definiert ist, notwendig sein, um ein ausgewähltes Dokumentverarbeitungsmerkmal auszuführen.

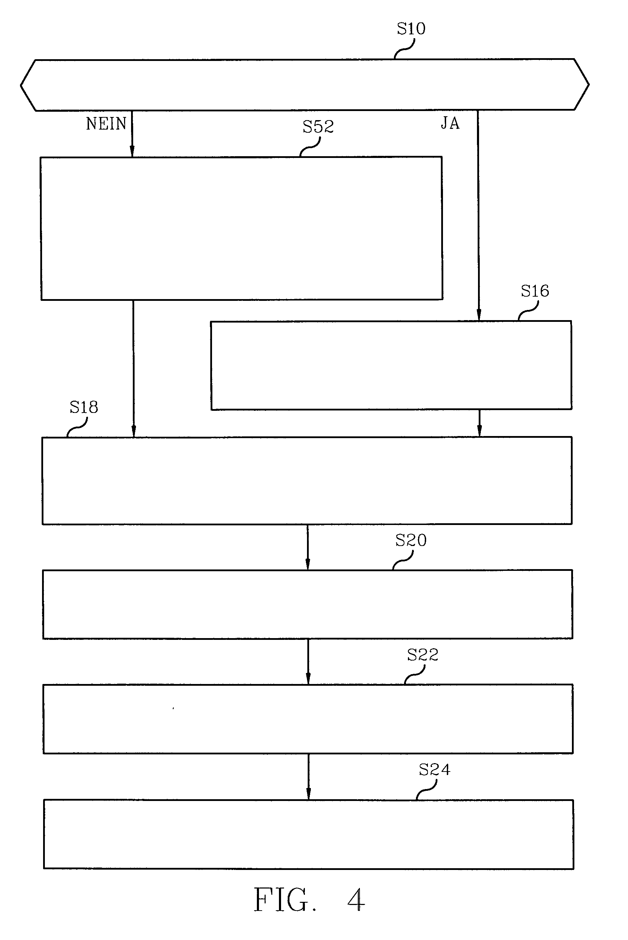

Das Verfahren aus FIG. 4 beschreibt ein Verfahren zur Individualisierung eines Druckauftrags, das mit dem Datenverarbeitungssystem 11 aus FIG. 3 übereinstimmt. Das Verfahren aus FIG. 4 entspricht dem Verfahren aus FIG. 2, abgesehen davon, dass das Verfahren aus FIG. 4 die im Allgemeinen gleichzeitige oder verschachtelte Ausführung der Umwandlung der Anwendungsdatei in eine Datei in Seitenbeschreibungssprache, die mit dem Drucker 24 und der Verwaltung der Individualisierung des Druckauftrags kompatibel ist, unterstützt. Gleiche Bezugsnummern in FIG. 2 und FIG. 4 bezeichnen gleiche Schritte.

In Schritt S10 erfasst das Datenverarbeitungssystem 11 oder ein Detektor 12, ob die Anwendungsdatei eine Datei in Seitenbeschreibungssprache (PDL) darstellt. Eine PDL-Datei kann eine Datei im portablen Dokumentformat (PDF), in Druckersteuerungssprache (PCL) oder in PostScript umfassen. In einem Beispiel bestimmt der Detektor 12, ob die Anwendungsdatei eine Datei in Seitenbeschreibungssprache darstellt, indem er den Kopfsatz der Anwendungsdatei liest. Falls die Anwendungsdatei eine Datei in Seitenbeschreibungssprache (PDL) darstellt, wird das Verfahren in Schritt S16 fortgesetzt. Falls die Anwendungsdatei jedoch keine Datei in Seitenbeschreibungssprache (PDL) darstellt, wird das Verfahren in Schritt S52 fortgesetzt.

In Schritt S52 wandelt das Datenverarbeitungssystem 11 oder der Konverter 14 die Anwendungsdatei in eine Datei in Seitenbeschreibungssprache um. Beispielsweise kann das Anwendungsprogramm Abschnitte der eingegebenen Anwendungsdatei zur Anordnung in einer Schablone entnehmen, die einem Format der Datei in Seitenbeschreibungssprache entspricht. Weiterhin ruft der Druckertreiber 50 den Konverter 14 und den Druckmerkmalmanager 51 gleichzeitig auf, oder er ruft den Konverter 14 und den Druckmerkmalmanager 51 in einer verschachtelten oder vorübergehend gestaffelten Weise auf, bis der Druckertreiber 50 einen Druckauftrag vollständig verarbeitet hat. Dementsprechend wandelt der Druckertreiber 50 einen Abschnitt der Anwendungsdatei in eine Datei in Seitenbeschreibungssprache um, woraufhin dem umgewandelten Abschnitt durch Mitwirkung der Erweiterungseinrichtung für anwenderspezifische Daten 18, der Anwenderschnittstelle 20 oder beider Komponenten ein ausgewähltes Dokumentverarbeitungsmerkmal hinzugefügt wird. Weiterhin bildet das vorgenannte Zusammenfügen der PDL-Datei und des Dokumentverarbeitungsmerkmals einen Zyklus, der solange wiederholt wird, bis der Druckauftrag vollständig verarbeitet ist.

Während Schritt S52 wählt das Datenverarbeitungssystem 13 aus einer Gruppe von Dokumentverarbeitungsmerkmalen für den gesamten Druckauftrag ein gewünschtes bzw. bevorzugtes Dokumentverarbeitungsmerkmal (wie z.B. ein Druckmerkmal) aus, wobei dies ein Vor- und Zurückschalten von der Umwandlung des Anwendungsdokuments zum Individualisierungs- und Datenerweiterungsvorgang umfassen kann. Der Anwender kann ein bevorzugtes Druckmerkmal in eine Befehlszeile oder ein Menü, das durch die Anwenderschnittstelle 20 unterstützt wird, eingeben.

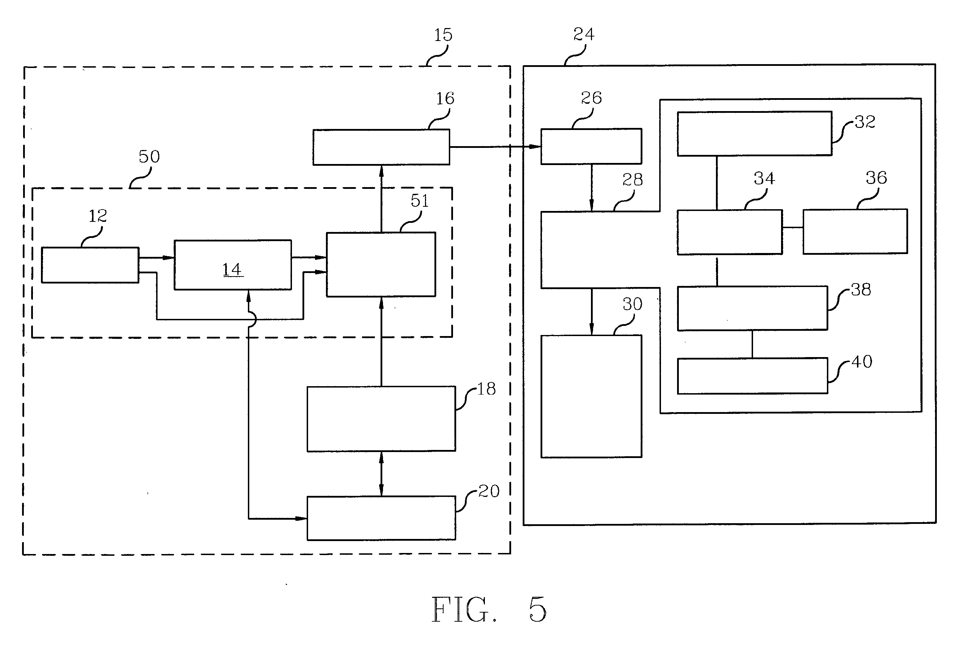

FIG. 5 ist ein Blockdiagramm eines Datenverarbeitungssystems, bei dem der Druckertreiber keinen Druckmerkmalmanager oder nur einen Druckmerkmalmanager mit einer beschränkten Auswahl an Dokumentverarbeitungsmerkmalen unterstützt. Dementsprechend wird zu dem Druckertreiber des Datenverarbeitungssystems eine Herunterladeeinrichtung in Reihe angeordnet, um die Auswahl der Dokumentverarbeitungsmerkmale zu ermöglichen. Gleiche Bezugsnummern in FIG. 1, FIG. 3 und FIG. 5 bezeichnen gleiche Elemente.

In FIG. 5 wird die Anwenderschnittstelle 20 sowohl einer Herunterladeeinrichtung 16 als auch einem Druckertreiber 50 zugeordnet. In diesem Fall unterstützt der Druckertreiber 50 eine Individualisierung oder einen gewünschten Grad der Individualisierung nicht. Dementsprechend bietet die Herunterladeeinrichtung 16 eine ergänzende Individualisierung.

Die Anwenderprogramm-Schnittstelle (API) unterstützt die Individualisierung von Plug-Ins, indem sie die Bezugnahme auf eine anwenderspezifische Bibliothek ermöglicht. In diesem Fall unterstützt der Druckertreiber 50 eine Individualisierung bzw. einen gewünschten Grad der Individualisierung nicht. Dementsprechend bietet die Herunterladeeinrichtung 16 eine ergänzende Individualisierung. Der Anwender schaltet die Individualisierung(en) mit Hilfe von Optionen der anwenderspezifischen Daten ein oder aus, die erweiterte PDL-Dateien der Herunterladeeinrichtung 16 zugeordnet haben. Wenn der RIP 28 erkennt, dass die Individualisierung(en) eingeschaltet ist (sind) und die Plug-In-Module installiert sind, betreibt der RIP 28 in einem angemessenen Zeitverhältnis zum Beginn eines Druckauftrags, zur Ausführung eines Bildes eines Druckauftrags, zum Ende eines Druckauftrags oder zu einer Kombination der vorgenannten Zeitpunkte mindestens ein Plug-In-Modul oder einen Abschnitt desselben. Die Individualisierung erlangt neben der Kenntnis über den Ein- bzw. Aus-Zustand des Druckauftrags vollständige Kenntnis über den Druckauftrag.

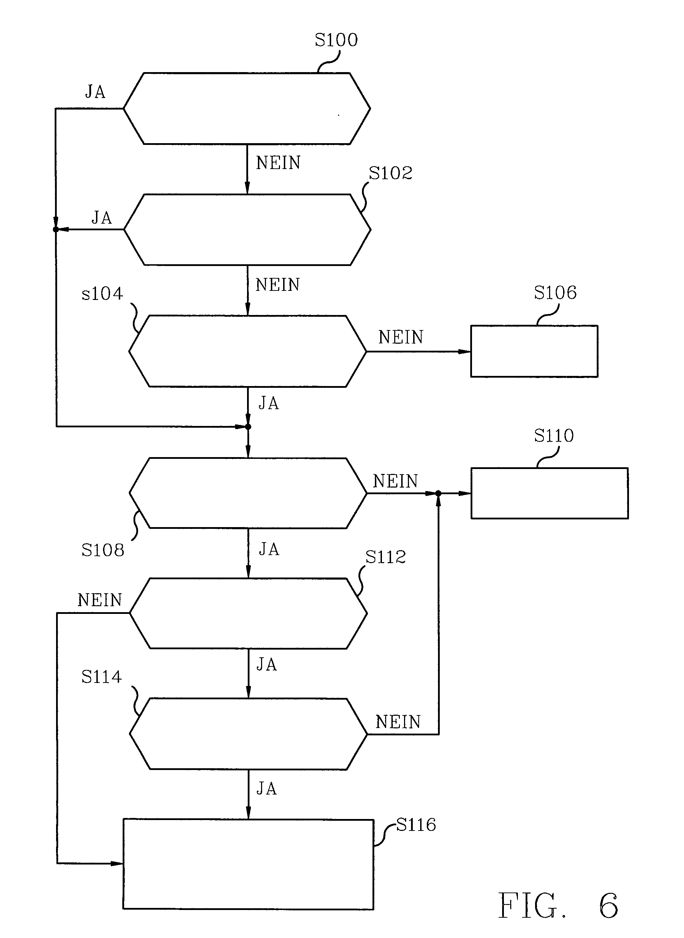

FIG. 6 ist ein Ablaufplan eines Verfahrens zur Ausführung einer Prozedur, die einem Plug-In-Modul für die Individualisierung eines Druckauftrags zugeordnet ist. In einem Beispiel verwendet das Verfahren aus FIG. 6 eine Definition eines Plug-In-Moduls, um einen Druckauftrag an die anwenderspezifischen Bedürfnisse anzupassen. In einem anderen Beispiel verwendet das Verfahren aus FIG. 6 eine Definition einer Reihenfolge, in der Plug-In-Module verwendet werden, um einen Druckauftrag an die anwenderspezifischen Bedürfnisse anzupassen.

In FIG. 6 werden die Dokumentverarbeitungsmerkmale als anwenderspezifische Daten in Form von anwenderspezifischen Daten, die in die Herunterladeeinrichtung 16, in den Druckertreiber oder beides eingebettet sind, dargestellt. Die anwenderspezifischen Daten, die in die Herunterladeeinrichtung 16 eingebettet sind, stellen anwenderspezifische Befehle für den Drucker 24 dar, die von der Herunterladeeinrichtung 16 in eine PDL-Datei eingebettet werden. Die anwenderspezifischen Daten, die in den Druckertreiber 50 eingebettet sind, stellen anwenderspezifische Befehle für den Drucker 24 dar, die vom Druckertreiber 50 in eine PDL-Datei eingebettet werden. Ein anwenderspezifischer Befehl enthält ein Plug-In-Moduletikett, das für die Ausführung eines Druckauftrags zu verwenden ist. Weiterhin kann ein anwenderspezifischer Befehl in Form von Argumenten ausgedrückt werden, die bestimmten Plug-In-Modulen hinzugefügt werden.

Das Verfahren aus FIG. 6 beginnt in Schritt S100. In Schritt S100 erfasst ein Syntaxanalysator eines Druckers 24 Dokumentverarbeitungsmerkmale (wie z.B. Druckermerkmale), die mit Hilfe einer Herunterladeeinrichtung 16 ausgewählt werden. Die "Individualisierungsprüfprozedur" bestimmt, welche anwenderspezifischen Plug-In-Module und Argumente verwendet werden. Wenn die Herunterladeeinrichtung 16 gemäß einer Ausführungsform ein Plug-In-Modul auswählt, hat die Auswahl der Herunterladeeinrichtung 16 Vorrang vor einer nicht übereinstimmenden Auswahl von Plug-In-Modulen des Druckertreibers 50.

Wenn der Syntaxanalysator anwenderspezifische Befehle, die in die Herunterladeeinrichtung 16 eingebettet sind, erfasst, wird das Verfahren in Schritt S108 fortgesetzt. Falls der Syntaxanalysator keine Befehle, die in die Herunterladeeinrichtung 16 eingebettet sind, erfasst, wird das Verfahren in Schritt S102 fortgesetzt.

In Schritt S102 erfasst ein Interpretierer 40 eines Druckers 24 ein Dokumentverarbeitungsmerkmal in Form eines in den Druckertreiber eingebetteten anwenderspezifischen Befehls in einer PDL-Datei. Die PDL-Datei kann eine umgewandelte Darstellung der Anwendungsdatei sein, die vom Konverter 14 umgewandelt wurde. Bei einer Ausführungsform erfasst bzw. erfassen ein oder mehrere Interpretierer 40 Druckermerkmale, die mit Hilfe eines Druckertreibers 50, der in dem PDL-Dokument eingebettet ist, ausgewählt werden. Die "Individualisierungsprüfprozedur" ist daran interessiert, welche anwenderspezifischen Plug-In-Module und Argumente wie im Druckertreiber 50 dargelegt verwendet werden.

Wenn der Interpretierer im PDL-Dokument keine anwenderspezifischen Befehle, die in den Treiber eingebettet sind, erfasst, wird das Verfahren in Schritt S104 fortgesetzt. Wenn der Interpretierer das Vorhandensein von anwenderspezifischen Befehlen, die in den Druckertreiber eingebettet sind, erfasst, wird das Verfahren in Schritt S108 fortgesetzt.

In Schritt S104 erhält der Drucker einen anwenderspezifischen Standardbefehl von einer Anwenderschnittstelle des Rasterbildprozessors. Wenn dementsprechend das anwenderspezifische Dokumentverarbeitungsmerkmal (wie z.B. das Druckmerkmal) nicht über eine Herunterladeeinrichtung 16 oder einen Druckertreiber 50 ausgewählt wird, verwendet der Drucker den anwenderspezifischen Standardbefehl. Weiterhin können Argumente, die von einer Anwenderschnittstelle des Rasterbildprozessors ausgewählt werden, die Funktionen des anwenderspezifischen Standardbefehls ergänzen.

Obwohl der anwenderspezifische Standardbefehl als Standard-Plug-In-Modul ausgedrückt werden kann, werden bei einer Ausführungsform in Schritt S106, der auf Schritt S104 folgt, keine Plug-In-Module verwendet. Ein Standard-Plug-In-Modul kann in der Plug-In-Moduldatenbank gespeichert werden und, wenn erforderlich, aus der Plug-In-Moduldatenbank wiedergewonnen werden.

In Schritt S108 überprüft eine Sicherheitsprüfeinrichtung des Druckers 24, ob der Anwender, der den Druckauftrag zum Drucker 24 sendet, ein befugter Anwender ist. Ein befugter Anwender ist für die Benutzung der Druck-Software des Druckers 24 zugelassen. Schritt S108 kann ausgelassen werden, wenn eine Sicherheits- oder Zulassungsbestätigung nicht erforderlich ist. Wenn der Anwender und der zugehörige Druckauftrag die Sicherheitsprüfung bestehen, wird das Verfahren in Schritt S112 fortgesetzt. Wenn der Anwender und der zugehörige Druckauftrag die Sicherheitsprüfung nicht bestehen, wird das Verfahren in Schritt S110 fortgesetzt.

In Schritt S110 annulliert der Drucker den Druckauftrag und meldet einer Anwenderschnittstelle einen Fehler. Beispielsweise könnte der Drucker einen Druckerfehlercode auf einem alphanumerischen Anzeigebildschirm anzeigen. Der Fehlercode kann anzeigen, dass der Anwender nicht befugt ist, der Druckauftrag nicht ausgeführt werden kann, oder er kann eine andere angemessene Datenmeldung anzeigen.

In Schritt S112, nach Schritt S108, analysiert der Subsyntaxanalysator die Subargumente auf Dokumentverarbeitungsmerkmale (wie z.B. Druckmerkmale), wenn in einer Plug-In-Modulkomponente Individualisierungsmerkmale ausgewählt sind, die als Individualisierungen bezeichnet werden können. Der Drucker 24 fordert von einer dynamischen Verbindungsbibliothek (DLL) Informationen an, um Argumente eines Plug-In-Moduls, Subargumente des Plug-In-Moduls oder beides zu realisieren.

Eine DLL bietet dem Drucker 24 große Flexibilität bei der Gestaltung zukünftiger Plug-Ins, die auf die dynamische Verbindungsbibliothek Bezug nehmen und zu dieser eine Verbindung herstellen. Dementsprechend kann der Software-Anbieter sein Produkt vertreiben, ohne Kenntnis davon zu haben, welche Plug-In-Module, wenn überhaupt, zukünftig verwendet werden oder wie die Plug-In-Module verwendet werden.

Ein Beispiel von DLL-Auswahlen wird mit Hilfe der Anwenderschnittstelle wie folgt eingegeben:
%KDKCustom: on (-dStore:arg1;Mail;CleanUp:arg2)

Die vorgenannte DLL-Auswahl ruft das "Speicher-Plug-In"-Modul mit Argument "arg1" auf, gefolgt von dem "Sende-Plug-In-Modul" ohne Argument, gefolgt von dem "Reinigungs"-Plug-In-Modul mit Argument "arg2".

Wenn für den Druckauftrag DLLs ausgewählt wurden, wird das Verfahren in Schritt S114 fortgesetzt. Wenn für den Druckauftrag jedoch keine DLLs ausgewählt wurden, so wird das Verfahren in Schritt S116 fortgesetzt.

In Schritt S114 prüft eine DLL-Prüfeinrichtung des Druckers 24, ob die korrekten DLL-Plug-In-Module im Drucker 24 installiert sind. Beispielsweise sind die korrekten DLL-Plug-In-Module installiert, wenn die Plug-In-Module in der Plug-In-Datenbank 36 vorhanden sind. Wenn die DLL-Prüfeinrichtung das Vorhandensein des korrekten DLL-Plug-In-Moduls bzw. der korrekten Plug-In-Module im Drucker 24 erfasst, wird das Verfahren in Schritt S116 fortgesetzt. Wenn die DLL-Prüfeinrichtung nicht das Vorhandensein des korrekten DLL-Plug-In-Moduls oder die Abwesenheit des korrekten DLL-Plug-In-Moduls bzw. der korrekten Plug-In-Module erfasst, so wird das Verfahren in Schritt S110 fortgesetzt.

In Schritt S116, der auf Schritt S112 oder Schritt S114 folgt, wählt der Drucker die geordneten Aufrufe aus einem oder mehreren ausgewählten Plug-In-Modulen aus. Ein ausgewähltes Plug-In-Modul kann Aufrufe für den Beginn eines Auftrags, das Ende eines Auftrags, ein Bild oder einen Abschnitt eines Bildes enthalten. Weiterhin sendet der Drucker für jeden Aufruf des Druckauftrags Argumente zum Interpretierer zurück. Wenn keine DLLs verwendet werden, besteht eine Beschränkung auf ein einziges statisches Plug-In-Modul.

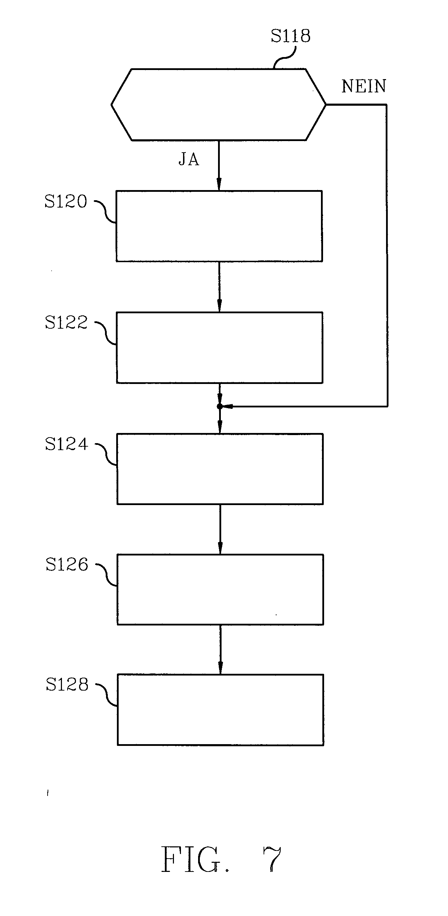

FIG. 7 zeigt ein spezifisches Beispiel eines Plug-In-Moduls gemäß der Erfindung. Dieses Plug-In-Modul aus FIG. 7 veranschaulicht ein dem Rasterbildspeicher-zu-Speicher Plug-In-Modul.

Bei der Rasterbildspeicher-zu-Speicher Prozedur aus FIG. 7 werden die "Anfang der Individualisierung"- Prozedur und die "Ende der Individualisierung"- Prozedur nicht verwendet. Jedoch könnte ein anderes Plug-In-Modul als eine Rasterbildspeicher-zu-Speicher Prozedur die "Anfang der Individualisierung"- Prozedur und die "Ende der Individualisierung"- Prozedur oder jede beliebige Kombination der vorgenannten Datenstrukturen verwenden oder auch nicht.

Ein Plug-In-Modul kann in drei mögliche Komponenten unterteilt werden: Auftragsbeginn, Individualisierung und Auftragsende. Das Rasterbildspeicher-zu-Speicher Plug-In-Modul verfügt über keine Befehle, die dem Auftragsbeginn und dem Auftragsende zugeordnet sind. Stattdessen kann das Rasterbildspeicher-zu-Speicher Plug-In-Modul eine Leerroutinenfunktion für den Auftragsbeginn und das Auftragsende aufweisen, wobei eine Leerroutinenfunktion in keinerlei Aktivitäten eingreift. Das Verfahren aus FIG. 7 beginnt in Schritt S118.

In Schritt S118 bestimmt der Drucker 24, ob eine Seite, die zugeführt wird oder in Kürze zugeführt wird, eine erste Seite des Druckauftrags ist. Wenn eine Seite die erste Seite eines Druckauftrags ist, wird das Verfahren in Schritt S120 fortgesetzt. Wenn eine Seite nicht die erste Seite eines Druckauftrags ist, wird das Verfahren in Schritt S124 fortgesetzt.

In Schritt S120 bezieht der Drucker 24 Auftragsinformationen aus den Druckauftragsdaten, wenn die Seite die erste Seite des Druckauftrags ist. Der Drucker bezieht einige Informationen über den Druckauftrag und speichert diese. Beispielsweise kann der Drucker Informationen darüber beziehen und speichern, wo der Auftrag anhand eines Auftragsnamens gespeichert werden soll.

In Schritt S122, nach Schritt S120, bestimmt der Drucker 24, ob dies ein Speicher- und Druckauftrag oder ein Nur-Speichernauftrag ist, indem er die Argumente, die zu dem Druckauftrag gehören, überprüft.

In Schritt S124 liest der Drucker 24 Rasterbänder aus dem Speicher (wie z.B. einem Gemeinschaftsspeicher) des Interpretierers 40.

In Schritt S126, nach Schritt S124, wandelt der Drucker 24 die Rasterbänder in ein TIFF-Dokument oder ein PDF-Dokument um. Der Drucker 24 wandelt die Rasterbänder in einer solchen Weise um, dass das Speichern und/oder die nachfolgende Verarbeitung des gespeicherten Dokuments erleichtert wird.

In Schritt S128 sendet der Drucker 24 einen Befehl zum Interpretierer 40, der den Interpretierer 40 anweist, ob die Seite gedruckt werden soll oder nicht. Der Befehl kann weiterhin Druckbefehle für den Druck der Seite umfassen.

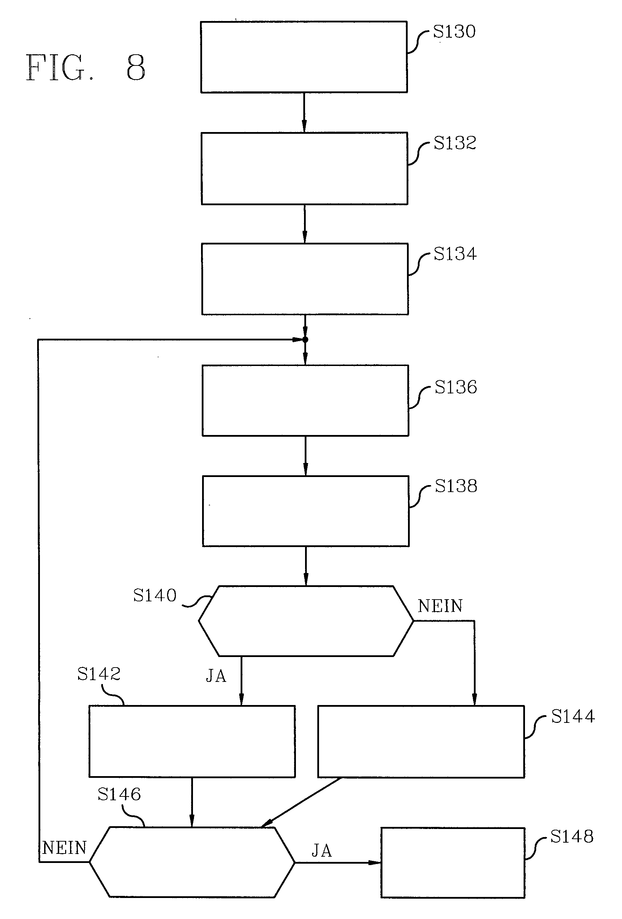

FIG. 8 zeigt Modifikationen des Interpretierers gemäß der Erfindung. Die Anwenderprogramm-Schnittstelle des Druckers 24 weist drei Datenstrukturen oder Eingabepunkte auf, die als anwenderspezifische Startdaten, anwenderspezifische Daten und anwenderspezifische Enddaten bezeichnet werden. Anwenderspezifische Startdaten unterstützen optionale Attribute einer Anwenderprogramm-Schnittstelle. Eine Anwenderprogramm-Schnittstelle kann einen anwenderspezifischen Start aufweisen oder nicht. Die anwenderspezifischen Startdaten beeinflussen den Beginn eines Druckauftrags. Beispielsweise können anwenderspezifische Startdaten vor dem Beginn der Bildverarbeitung aufgerufen werden, um eine Serienbrieferstellung auszuführen und geeignete Adressen zur Einfügung in ein Dokument eines Druckauftrags zu erlangen.

Anwenderspezifische Daten unterstützen Attribute einer Anwenderprogramm-Schnittstelle. Wenn in der Anwenderprogramm-Schnittstelle keine anwenderspezifischen Startdaten und keine anwenderspezifischen Enddaten vorhanden sind, dann ist die Individualisierung vorhanden. Ein Beispiel eines Attributes, das von der Individualisierung unterstützt wird, ist das Rasterbildspeicher-zu-Speicher Plug-In-Modul. Das Rasterbildspeicher-zu-Speicher Plug-In-Modul verwendet die Individualisierung allein, ohne den anwenderspezifischen Start oder das anwenderspezifische Ende.

Anwenderspezifische Enddaten unterstützen optionale Attribute einer API. Eine API kann ein anwenderspezifisches Ende aufweisen oder nicht. Am Ende eines Druckauftrags reinigt (z.B. löscht) der Drucker 24 diese Daten in dem Druckauftrag oder benachrichtigt einen anderen Prozess oder auch nicht. Der Drucker 24 könnte den Rasterbildspeicherprozessor nehmen und diese Daten zu anderen Anwendungsprogrammen aussenden.

Die drei Eingabepunkte anwenderspezifische Startdaten, anwenderspezifische Daten und anwenderspezifische Enddaten stellen für die Individualisierung eines Druckauftrags einen hohen Grad an Flexibilität bereit. Die drei Eingabepunkte stellen das Grundgerüst dar, das in einer organisierten Art und Weise zur Erfüllung einer großen Auswahl von Individualisierungsanforderungen verwendet werden kann. Das Verfahren aus FIG. 8 beginnt in Schritt S130.

In Schritt S130 beginnt ein Interpretierer 40 mit der Verarbeitung eines Druckauftrags. Der Interpretierer 40 kann während der Rasterbildverarbeitung aufgerufen werden. In einer Ausführungsform übergibt ein Emulationssensor, der einem oder mehreren Interpretierern 40 vorgeschaltet ist, das PDL-Dokument dem korrekten Interpretierer. Nach der Übergabe beginnt der Interpretierer 40 oder eine Gruppe von Interpretierern 40 mit dem Druckauftrag.

In Schritt S132 ruft der Drucker 24 die Individualisierungsprüfprozedur auf. Die Individualisierungsprüfprozedur kann Modifikationen des Interpretierers 40 umfassen.

In Schritt S134 ruft der Drucker 24 anwenderspezifische Auftragsstartdaten aus einer ersten Bibliothek auf. Die erste Bibliothek enthält Auftragsstartdaten. Beispielsweise kann die erste Bibliothek eine DLL darstellen, die sich dem Speichern von Befehlen und Argumenten, die auf die Auftragsstartdaten bezogen sind, widmet. Bevor die anwenderspezifischen Auftragsstartdaten aufgerufen werden, prüft der Drucker 24 die Aufrufe auf Gültigkeit, indem er die Übereinstimmung mit der Syntax und/oder dem Datenformat verifiziert.

Der Drucker 24 kann aus einer anwenderspezifischen Bibliothek mehrere Individualisierungsprozeduren (wie z.B. anwenderspezifische Auftragsstarts) in einer definierten Reihenfolge aufrufen, um ein oder mehrere Bilder innerhalb eines Druckauftrags, einen Druckauftrag oder beides an die anwenderspezifischen Wünsche anzupassen. Der Drucker 24 kann aus einer anwenderspezifischen Bibliothek mehrere anwenderspezifische Auftragsstarts in einer definierten Reihenfolge aufrufen, um einen Druckauftrag an die anwenderspezifischen Wünsche anzupassen. Beispielsweise kann der Drucker 24 folgenden Befehl ausführen:
"%KDKCustom on (-dStore:arg1;Mail:CleanUp:arg2)".

Zuerst ruft der Drucker 24 eine erste Individualisierungsprozedur, genannt "anwenderspezifischen Auftragsstart speichern", auf. Als zweites ruft der Drucker eine zweite Individualisierungssprozedur, genannt "anwenderspezifischen Auftragsstart senden", auf, nachdem die erste Prozedur aufgerufen wurde. Als drittes ruft der Drucker 24 eine dritte Individualisierungssprozedur, genannt "anwenderspezifischen Auftragsstart reinigen", auf.

In Schritt S136 wird ein Seite-zu-Rasterbildprozessor Plug-In aufgerufen. Ein Seite-zu-Rasterbildprozessor Plug-In wandelt ein PDL-Dokument in ein Rasterbild für den Druck mit Hilfe des Rasterdruckmoduls des Druckers um. Beispielsweise verarbeitet der Interpretierer in einer Schleife jede Seite zu einem Rasterbild für den Druck im Drucker.

In Schritt S138 ruft der Drucker 24 anwenderspezifische Daten aus einer zweiten Bibliothek auf. Die zweite Bibliothek enthält anwenderspezifische Daten zur Individualisierung eines Bildes oder eines Abschnitts eines Bildes eines Druckauftrags. Beispielsweise kann die zweite Bibliothek eine DLL darstellen, die sich dem Speichern von Befehlen und Argumenten, die auf die Auftragsstartdaten bezogen sind, widmet. Bevor die anwenderspezifischen Daten aufgerufen werden, prüft der Drucker 24 die Aufrufe auf Gültigkeit, indem er die Übereinstimmung mit der Syntax und/oder dem Datenformat verifiziert. Der Drucker 24 kann mehrere anwenderspezifische Auftragsenden in einer definierten Reihenfolge aufrufen, um ein oder mehrere Bilder innerhalb eines Druckauftrags, einen Druckauftrag, oder beides an die anwenderspezifischen Wünsche anzupassen.

In Schritt S140 bestimmt der Drucker 24, ob die Seite, die zugeführt wird, gedruckt werden soll. Wenn die Seite, die zugeführt wird, gedruckt werden soll, wird das Verfahren in Schritt S142 fortgesetzt. Wenn die Seite, die zugeführt wird, nicht gedruckt werden soll, wird das Verfahren in Schritt S144 fortgesetzt.

In Schritt S142 wird die Seite unter Verwendung von aufgerufenen Auftragsstartdaten aus der ersten Bibliothek und von aufgerufenen anwenderspezifischen Daten aus der zweiten Bibliothek gedruckt. Beispielsweise druckt das Rasterdruckmodul (z.B. die Markiermaschine) die Seite unter Verwendung der geeigneten Daten.

Wenn das Bild nicht gedruckt werden soll, simuliert der Drucker 24 oder das Rasterdruckmodul in Schritt S144, dass es gedruckt wurde, indem die geeigneten Daten zu anderen Softwaremodulen im Drucker 24 gesendet werden. Die geeigneten Daten können aus einer Seite-drucken-beendet-Datennachricht bestehen.

Nach Schritt S142 oder Schritt S144 wird das Verfahren in Schritt S146 fortgesetzt. In Schritt S146 bestimmt das Verfahren, ob die letzte Seite, die gedruckt oder simuliert wurde, die letzte Seite eines Druckauftrags war. Wenn die letzte gedruckte Seite nicht die letzte Seite eines Druckauftrags ist, wird das Verfahren in Schritt S136 fortgesetzt. Wenn die letzte gedruckte Seite jedoch die letzte Seite eines Druckauftrags ist, so wird das Verfahren in Schritt S148 beendet. In Schritt S148 ruft der Drucker 24 anwenderspezifische Auftragsenddaten aus einer dritten Bibliothek auf. Die dritte Bibliothek enthält anwenderspezifische Auftragsenddaten zur Individualisierung eines Druckauftrags. Beispielsweise kann die dritte Bibliothek eine DLL darstellen, die sich dem Speichern von Befehlen und Argumenten, die auf Auftragsstartdaten bezogen sind, widmet. Bevor die anwenderspezifischen Auftragsenddaten aufgerufen werden, prüft der Drucker die Aufrufe auf Gültigkeit, indem er die Übereinstimmung mit der Syntax und/oder dem Datenformat verifiziert.

Die Erfindung unterstützt die Bildung von einzigartigen Plug-Ins durch eine API (Anwenderprogramm-Schnittstelle). Die Erfindung unterstützt die Auswahl verschiedener Plug-Ins aus einer Gruppe von Plug-Ins. Die Erfindung unterstützt die Reihenfolge der Ausführung ausgewählter Plug-Ins. Die Erfindung beseitigt oder verringert die Notwendigkeit, ein Standardprodukt zu modifizieren. Stattdessen werden verschiedene Plug-In-Module zur Durchführung der gewünschten Merkmale eines Druckers implementiert. Das Plug-In kann in einer PDL ausgedrückt werden.

Der Grad der Individualisierung steht mit der Vielzahl und dem Anwendungsbereich der Plug-In-Module im Einklang, die in einer Plug-In-Datenbank des Druckers organisiert werden können. Weiterhin hängt der Grad der Individualisierung vom Grad der Individualisierung, der durch mögliche Veränderungen der Reihenfolge der Ausführung der Plug-In-Module erreichbar ist, ab.

Die Individualisierung kann verschiedene Optionen unterstützen und eine fliegende Unterbrechung bzw. ein fliegendes Aussetzen des Druckvorgangs ermöglichen. Die Plug-In-Module beziehen sich auf die Hardwaremodule, die Softwaremodule oder beide, die dem Drucker bestimmte Merkmale oder bestimmte Dienste hinzufügen. Daher kann eine gesamte Bibliothek von Software-Plug-Ins oder Hardware-Plug-Ins nötig sein, um eine Individualisierung zu realisieren, die den Anwendereinstellungen entspricht.

Jedes Plug-In-Modul kann unabhängig von der Entwicklung des Standarddruckers oder anderer Plug-In-Module entwickelt werden. Jedoch wird das Schema der verfügbaren Plug-In-Module vorzugsweise durch das gesamte Spektrum von möglichen Dokumentdarstellungen geplant bzw. verteilt, um einen gewünschten Grad der Individualisierung zu erreichen. Weiterhin können Plug-In-Module für verschiedene Druckkategorien und Druckermodelle in einer standardisierten Weise eingesetzt werden. Dementsprechend können Techniker für das Standard-Individualisierungspaket, das auf eine große Auswahl verschiedener Drucker anwendbar ist, geschult werden, so dass die Schulungseffizienz und die Kundenzufriedenheit erhöht werden. Die erforderliche Dokumentation zur Unterstützung verschiedener Plug-In-Module und Druckermodule wird auf einfache und standardisierte Weise bereitgestellt, so dass die Kundenzufriedenheit erhöht wird und die technischen Ressourcen, die für die Behebung eines fehlerhaften oder defekten Betriebs vor Ort nötig sind, verringert werden. Der Rasterbildprozessor 28 oder die Druckertreiber, die in mehreren verschiedenen Druckern zur Individualisierung verwendet werden, können auf einfache Weise und in großem Ausmaß standardisiert werden, so dass die Kundenzufriedenheit erhöht wird und die technischen Ressourcen, die für die Behebung eines fehlerhaften oder defekten Betriebs von Druckern vor Ort nötig sind, verringert werden.

Die Anwenderschnittstelle 20 sämtlicher Ausführungsformen kann eine Anwenderprogramm-Schnittstelle darstellen, die es einem Programmierer, einem Bediener oder beiden ermöglicht, Einstellungen vorzunehmen und den Druckbetrieb eines Druckers 24 an die anwenderspezifischen Wünsche anzupassen. Die "DLs bestimmen"-Routine bezieht für die Individualisierung dynamische Bibliotheksdaten (wie z.B. DLLs) aus zuvor definierten Prozesszeichenketten. Die Anwenderprogramm-Schnittstelle kann eine oder mehrere Routinen oder Werkzeuge zur Konstruktion von Plug-In-Softwaremodulen oder Software-Druckertreibern in dynamischer Weise aufrufen. Beispielsweise kann die Anwenderschnittstelle 20 die Entwicklung einer anwenderspezifischen Druckanordnung vor Ort unterstützen, nachdem ein Drucker einem Endanwender geliefert wurde.

Weiterhin kann die Individualisierung verschiedene Dokumentverarbeitungsoptionen unterstützen und den Druckvorgang abschalten. Die Entwicklung des Standardprodukts und die Individualisierung sind voneinander getrennt, wodurch eine unabhängige Entwicklung und universelle Anwendbarkeit der Individualisierung ermöglicht wird. Dementsprechend können Techniker für ein Standard-Individualisierungspaket, das für eine große Auswahl von Drucker-Software anwendbar ist, geschult werden. Eine Implementierung der Erfindung kann ein Rasterbildprozessor sein.

Die vorangehende Beschreibung der Erfindung zeigt verschiedene veranschaulichende Beispiele der Erfindung auf. Modifikationen, alternative Anordnungen und Veränderungen dieser veranschaulichenden Beispiele sind möglich und fallen in den Bereich der Erfindung.

### Bezugszeichenliste

- 10: Druckvorrichtung
- 11: Datenverarbeitungssystem
- 12: Detektor
- 13: Datenverarbeitungssystem
- 14: Konverter
- 15: Datenverarbeitungssystem
- 16: Herunterladeeinrichtung
- 18: Erweiterungseinrichtung für anwenderspezifische Daten
- 20: Anwenderschnittstelle
- 24: Drucker
- 26: Spooler
- 28: Rasterbildprozessor (RIP)
- 30: Rasterdruckmodul
- 32: Individualisierungsdetektor
- 34: Plug-In-Selektor
- 36: Plug-In-Datenbank
- 38: aktives Plug-In-Modul
- 40: Interpretierer
- 50: Druckertreiber
- 51: Druckermerkmalmanager

## Patentansprüche

1. Verfahren zur Individualisierung eines Druckauftrags, wobei das Verfahren folgende Schritte umfasst:
Empfang einer Eingabe einer Anwendungsdatei;
Auswahl eines bevorzugten Dokumentverarbeitungsmerkmals aus einer Gruppe von Dokumentverarbeitungsmerkmalen für einen Druckauftrag; und
Anwenden eines Plug-In-Moduls (38) zur Unterstützung der bevorzugten Dokumentverarbeitungsmerkmale auf die Anwendungsdatei.

2. Verfahren nach Anspruch 1,
**dadurch gekennzeichnet,**
**dass** das Verfahren weiterhin den Schritt des Druckens mindestens eines Abschnitts der Anwendungsdatei unter Verwendung des Plug-In-Moduls (38) für den Druckauftrag umfasst.

3. Verfahren nach einem der Ansprüche 1 bis 2,
**dadurch gekennzeichnet,**
**dass** dabei die Anwendungsdatei eine Datei in Seitenbeschreibungssprache umfasst, die aus der Gruppe ausgewählt wird, die aus einer Datei im portablen Dokumentformat (PDF), einer Datei in Druckersteuerungssprache (PCL) und einer Datei in PostScript besteht.

4. Verfahren nach einem der Ansprüche 1 bis 3,
**dadurch gekennzeichnet,**
**dass** das Verfahren weiterhin folgenden Schritt umfasst:
Bestimmen, ob die Datei eine Datei in Seitenbeschreibungssprache darstellt oder nicht;
Umwandeln der empfangenen Anwendungsdatei in eine Datei in Seitenbeschreibungssprache, wenn die empfangene Anwendungsdatei keine Datei in Seitenbeschreibungssprache darstellt.

5. Verfahren nach einem der Ansprüche 1 bis 4,
**dadurch gekennzeichnet,**
**dass** der Auswahlschritt umfasst:
Zugriff auf eine Plug-In-Moduldatenbank (36), um das ausgewählte Plug-In-Modul (38) wiederzugewinnen.

6. Verfahren zur Individualisierung eines Druckauftrags, wobei das Verfahren folgende Schritte umfasst:
Empfang einer Eingabe einer Anwendungsdatei;
Umwandeln der Anwendungsdatei in eine Datei in Seitenbeschreibungssprache, wenn die Anwendungsdatei in einem Format vorliegt, das vom Dateiformat in Seitenbeschreibungssprache verschieden ist;
Zuordnen eines bevorzugten Dokumentverarbeitungsmerkmals zu der Datei in Seitenbeschreibungssprache;
Auswählen eines Plug-In-Moduls (38), das dem bevorzugten Dokumentverarbeitungsmerkmal für einen Druckauftrag zugeordnet ist, und
Drucken der Datei in Seitenbeschreibungssprache unter Verwendung des ausgewählten Plug-In-Moduls (38) für einen Druckauftrag.

7. Verfahren nach Anspruch 6,
**dadurch gekennzeichnet,**
**dass** dabei die Datei in Seitenbeschreibungssprache in einer Form vorliegt, die aus der Gruppe ausgewählt wird, die aus einer Datei im portablen Dokumentformat (PDF), einer Datei in Druckersteuerungssprache (PCL) und einer Datei in PostScript besteht.

8. Verfahren nach einem der Ansprüche 6 bis 7,
**dadurch gekennzeichnet,**
**dass**, der Auswahlschritt umfasst:
Zugriff auf eine Plug-In-Datenbank (36), um das ausgewählte Plug-In-Modul (38) wiederzugewinnen.

9. Vorrichtung zur Individualisierung eines Druckauftrags, wobei die Vorrichtung umfasst:
einen Detektor zum Empfang einer Eingabe einer Anwendungsdatei und zur Bestimmung, ob die Anwendungsdatei eine Datei in Seitenbeschreibungssprache darstellt;
eine Anwenderschnittstelle (20) zur Auswahl eines bevorzugten Dokumentverarbeitungsmerkmals aus einer Gruppe von Dokumentverarbeitungsmerkmalen; und
einen Drucker (24), der das Plug-In-Modul (38), das den bevorzugten Dokumentverarbeitungsmerkmalen zugeordnet ist, auf die Anwendungsdatei anwendet.

10. Vorrichtung nach Anspruch 9,
**dadurch gekennzeichnet,**
**dass** der Drucker (24) ein Rasterdruckmodul (30) für den Druck der Anwendungsdatei umfasst.

11. System nach einem der Ansprüche 9 bis 10,
**dadurch gekennzeichnet,**
**dass** die Anwendungsdatei eine Datei in Seitenbeschreibungssprache umfasst, die aus der Gruppe ausgewählt wird, die aus einer Datei im portablen Dokumentformat (PDF), einer Datei in Druckersteuerungssprache (PCL) und einer Datei in PostScript besteht.

12. Vorrichtung nach einem der Ansprüche 9 bis 11,
**dadurch gekennzeichnet,**
**dass** die Vorrichtung einen Konverter (14) zum Umwandeln der Anwendungsdatei in eine Datei in Seitenbeschreibungssprache umfasst, wenn die Anwendungsdatei keine Datei in Seitenbeschreibungssprache darstellt.

13. Vorrichtung nach einem der Ansprüche 9 bis 12,
**dadurch gekennzeichnet,**
**dass** der Drucker (24) einen Individualisierungsdetektor (32), einen Plug-In-Selektor (34) und eine Plug-In-Datenbank (36) umfasst und der Individualisierungsdetektor (32) so konfiguriert ist, dass er erfasst, ob der Anwendungsdatei anwenderspezifische Daten zugeordnet sind, der Plug-In-Selektor (34) mit dem Individualisierungsdetektor (32) in Verbindung steht und die Plug-In-Datenbank (36) zur Auswahl eines aktiven Plug-In-Moduls (38) auf den anwenderspezifischen Daten basiert.

14. Vorrichtung zur Individualisierung eines Druckauftrags, wobei die Vorrichtung einen Detektor zum Empfang einer Eingabe einer Anwendungsdatei und zur Bestimmung, ob die Anwendungsdatei eine Datei in Seitenbeschreibungssprache darstellt, umfasst,
sowie eine Datenerweiterungseinrichtung zur Zuordnung eines bevorzugten Dokumentverarbeitungsmerkmals zur Anwendungsdatei und
einen Plug-In-Selektor (34), der ein Plug-In-Modul (38) zur Unterstützung des bevorzugten Dokumentverarbeitungsmerkmals auswählt.

15. Vorrichtung nach Anspruch 14,
**dadurch gekennzeichnet,**
**dass** die Vorrichtung einen Drucker (24) zum Drucken der Anwendungsdatei unter Verwendung des ausgewählten Plug-In-Moduls (38) umfasst.

16. Vorrichtung nach einem der Ansprüche 14 bis 15,
**dadurch gekennzeichnet,**
**dass** die Anwendungsdatei eine Datei in Seitenbeschreibungssprache umfasst, die aus einer Gruppe ausgewählt wird, die aus einer Datei im portablen Dokumentformat (PDF), einer Datei in Druckersteuerungssprache (PCL) und einer Datei in PostScript besteht.

17. Vorrichtung nach einem der Ansprüche 14 bis 16,
**dadurch gekennzeichnet,**
**dass** die Vorrichtung weiterhin einen Konverter (14) zum Umwandeln der Anwendungsdatei in eine Datei in Seitenbeschreibungssprache, wenn die Anwendungsdatei keine Datei in Seitenbeschreibungssprache darstellt, umfasst.

18. Vorrichtung nach einem der Ansprüche 14 bis 17,
**dadurch gekennzeichnet,**
**dass** der Plug-In-Selektor (34) so eingerichtet ist, dass er auf eine Plug-In-Datenbank (36) zugreift, um das ausgewählte Plug-In-Modul (38) wiederzugewinnen.

19. Vorrichtung nach einem der Ansprüche 14 bis 18,
**dadurch gekennzeichnet,**
**dass** die Datenerweiterungseinrichtung (18) mit einer Herunterladeeinrichtung (16) zusammenwirkt, um das bevorzugte Dokumentverarbeitungsmerkmal in der Anwendungsdatei als anwenderspezifische Daten auszudrücken, die in der Herunterladeeinrichtung (16) eingebettet sind.

20. Vorrichtung nach einem der Ansprüche 14 bis 18,
**dadurch gekennzeichnet,**
**dass** die Datenerweiterungseinrichtung (18) mit einem Druckertreiber (50) zusammenwirkt, um das bevorzugte Dokumentverarbeitungsmerkmal in der Anwendungsdatei als anwenderspezifische Daten auszudrücken, die im Druckertreiber (50) eingebettet sind.
